# FASCICULE DE BREVET EUROPEEN

(11) **EP 3 213 112 B1**
(45) Date de publication et mention de la délivrance du brevet: **16.12.2020**
(21) Numéro de dépôt: 15787174.0
(22) Date de dépôt: 23.10.2015
(51) Int. Cl.: G01S 13/42, G01S 7/292, G01S 13/524

(54) **PROCÉDÉ DE TRAITEMENT DU SIGNAL D'UN RADAR EN MODE DE DÉTECTION TERRE / MER; CHAÎNE DE TRAITEMENT ET PRODUIT PROGRAMME D'ORDINATEUR ASSOCIÉS**
VERFAHREN ZUR VERARBEITUNG EINES RADARSIGNALS IN EINEM LAND/SEE-DETEKTIONSMODUS, VERARBEITUNGSSYSTEM UND ZUGEHÖRIGES COMPUTERPROGRAMMPRODUKT
METHOD FOR PROCESSING A RADAR SIGNAL IN LAND/SEA DETECTION MODE; PROCESSING SYSTEM AND ASSOCIATED COMPUTER PROGRAM PRODUCT

(30) Priorité: 28.10.2014 FR 1402433
(43) Date de publication de la demande: 06.09.2017
(73) Titulaire: THALES, 92400 Courbevoie (FR)
(72) Inventeur: CORRETJA, Vincent, F-33608 Pessac Cedex (FR); GUERRINI, Gilles, F-33608 Pessac Cedex (FR); MONTIGNY, Richard, F-78851 Elancourt (FR); SFEZ, Thierry, David, F-78851 Elancourt (FR)
(74) Mandataire: Lavoix
(86) Numéro de dépôt international: PCT/EP2015/074590
(87) Numéro de publication internationale: WO 2016/066540

(56) Documents cités:
- US-A1- 2010 176 984
- US-A1- 2013 342 382
- US-B1- 6 885 334
- YAZHOU WANG ET AL: "Range-time-frequency representation of a pulse Doppler radar imaging system for indoor localization and classification", PROCEEDINGS OF IEEE TOPICAL CONFERENCE ON WIRELESS SENSORS AND SENSOR NETWORKS (WISNET), 2013, 20 janvier 2013 (2013-01-20), - 23 janvier 2013 (2013-01-23), pages 34-36, XP032351240, DOI: 10.1109/WISNET.2013.6488625 ISBN: 978-1-4673-3104-3
- L. YUAN ET AL: "DEM-based Watershed Topographic Attributes Extraction and Analysis", GEOSCIENCE AND REMOTE SENSING SYMPOSIUM, 2006. IGARSS 2006. IEEE INTER NATIONAL CONFERENCE ON, 1 July 2006 (2006-07-01), pages 911-913, XP055527150, Pi DOI: 10.1109/IGARSS.2006.234 ISBN: 978-0-7803-9510-7

## Description

L'invention a pour domaine celui des procédés de traitement du signal d'un radar à balayage en mode de détection terre / mer.

Un radar à balayage, mécanique ou électronique, par exemple porté par un avion de surveillance maritime, est dit à impulsions lorsqu'il émet périodiquement une impulsion électromagnétique.

Le signal reçu en retour par le radar est d'abord converti en un signal numérique par passage à travers un étage de prétraitement analogique et un étage de conversion analogique / numérique.

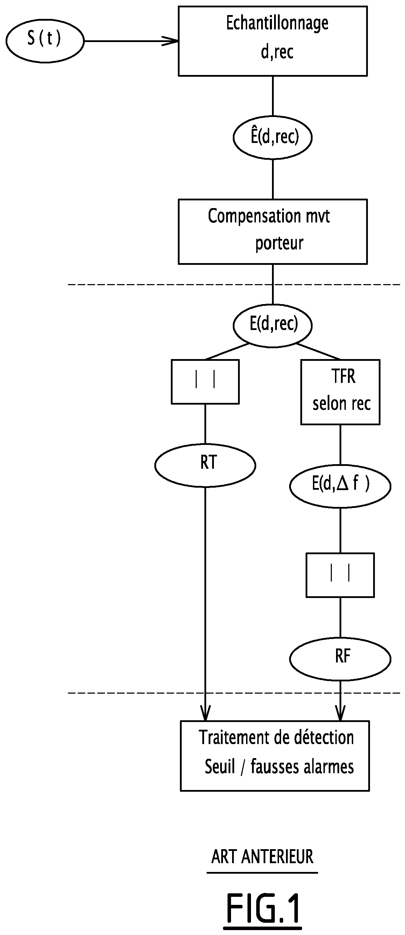

Puis, comme représenté sur la figure 1, le signal numérique résultant, S(t), dépendant du temps *t,* est ensuite échantillonné selon une carte temporelle d'échantillonnage à deux dimensions. Le signal est échantillonné à la fois selon un temps court, correspondant à une dimension en distance *d*, et selon un temps long, correspondant à une dimension en récurrence *rec.* a dimension en récurrence est équivalente à une information angulaire d'azimut *ϕ*. Dans ce qui suit, on parlera indifféremment de récurrence ou d'angle pour cette dimension temporelle.

Un intervalle d'échantillonnage en distance, ou case distance, correspond à la résolution en distance du radar. De même, un intervalle d'échantillonnage en récurrence, ou case récurrence correspond à la résolution angulaire du radar.

Après l'étape d'échantillonnage, qui permet d'obtenir des échantillons bruts distance / récurrence *Ê(d,rec),* le traitement du signal se poursuit par une étape de compensation des mouvements de l'avion, de manière à obtenir des échantillons distance / récurrence. Chaque échantillon distance / récurrence *E(d,rec)* est associé à une cellule de la carte temporelle, identifiée par une case distance *d* et une case récurrence *rec.*

Puis, dans le cas d'un traitement de détection non-cohérent, la puissance de chaque échantillon distance / récurrence est calculée, puis associée à la cellule correspondante de manière à obtenir une représentation distance / récurrence, dite représentation temporelle, RT, de la zone observée par le radar.

Par ailleurs, dans le cas d'un traitement cohérent, une transformée de Fourier rapide TFR peut être appliquée, selon la dimension en récurrence, aux échantillons distance / récurrence *E(d,rec),* de manière à échantillonner le signal S(t) selon une dimension correspondant à une information de fréquence Doppler Δ*f*, duale de la dimension en récurrence. Un intervalle d'échantillonnage en fréquence Doppler, ou case en fréquence, correspond à la résolution fréquentielle du radar. Des échantillons distance / fréquence Doppler *E(d,* Δ*f*) sont ainsi obtenus.

Puis, la puissance de chaque échantillon distance / fréquence Doppler *E(d,* Δ*f*) est calculée, et associée à la cellule correspondante de manière à obtenir une représentation distance / fréquence Doppler, dite représentation fréquentielle, RF, de la zone observée par le radar.

Après ces étapes de traitement du signal, un traitement de détection est appliqué sur la représentation temporelle RT et / ou sur la représentation fréquentielle RF, pour identifier des cibles.

De manière générale, le signal S(t) comporte des échos utiles, correspondant à des cibles d'intérêt que l'on cherche à détecter, et des échos parasites, constitués en particulier par le fouillis de terre ou le fouillis de mer (aussi dénommé « clutter » en anglais). Le fouillis de terre correspond à des obstacles à la surface de la terre (bâtiments, végétation, etc.) et le fouillis de mer correspond à des obstacles à la surface de la mer (vagues). Ces obstacles renvoient un écho vers le radar. Le fouillis de terre et le fouillis de mer possèdent des empreintes, notamment fréquentielles, caractéristiques et connues.

Dans une première étape du traitement de détection, un seuil de détection est appliqué sur la représentation utilisée (RT ou RF) pour ne retenir que les cellules dont la puissance est supérieure à ce seuil. Les échantillons correspondant à ces cellules retenues constituent des détections.

Le traitement de détection est effectué de manière à obtenir un taux constant de fausses alarmes (au sens d'une détection qui n'est en fait pas une cible). Pour cela, le seuil de détection est calculé dynamiquement en fonction du nombre de détections auquel conduit l'application d'un certain niveau de seuil. Par exemple, si la zone à observer est une surface de mer, le seuil de détection sera faible. En revanche, si la zone à observer est une surface de terre, le seuil sera relevé. En effet, le coefficient de réflectivité de la terre étant plus fort que celui de la mer, la terre génère de nombreux échos parasites. Ceux-ci seront considérés comme des détections, si le niveau du seuil reste faible. Le seuil est par conséquent relevé pour une surface de terre.

Le document US 2013/342382 divulgue un procédé d'adaptation du seuil de détection de cibles dans un signal reçu au cours de l'observation d'une zone maritime par un radar embarqué sur un navire.

Cependant, pour la surveillance d'une zone côtière, la zone observée par le radar, fonctionnant alors en mode terre / mer, peut comporter à la fois une surface de terre et une surface de mer.

Or, la surface de terre constitue un élément perturbateur pour la détection de cibles à la surface de l'eau. En effet, si le seuil de détection n'est pas relevé, les échos parasites de la surface de terre conduisent à un taux de fausses alarmes qui augmente sans pouvoir être maîtrisé. De plus, le nombre de détections à suivre augmente la charge de calcul. Enfin, le nombre élevé de fausses alarmes entraine une situation tactique confuse.

Ainsi, à proximité de la côte, le seuil de détection est relevé. Il n'est alors plus optimisé pour la détection de petites cibles à la surface de l'eau, petites cibles se caractérisant par une Surface Equivalente Radar (SER) faible. En conséquence, la probabilité de détection des cibles de faibles SER est dégradée en mode de détection terre / mer.

L'invention a donc pour but de pallier ce problème.

L'invention a pour objet un procédé de traitement du signal numérique d'un radar à impulsion et à balayage lors d'une observation d'une zone côtière en mode de détection terre / mer selon les revendications annexées.

L'invention consiste à utiliser un modèle numérique de terrain (fichier MNT dans ce qui suit). Il s'agit d'un fichier numérique associant à chaque point géographique, l'altitude positive de ce point. Dans un tel fichier, un point appartenant à la surface de mer est par exemple associé à une altitude infiniment négative.

Plus précisément, l'invention consiste à exploiter a *priori* l'information contenue dans un tel fichier MNT sur la présence de terre et de mer dans la zone observée par le radar, au cours du traitement du signal, en amont du traitement de détection.

Pour cela, un masque est élaboré à partir d'un fichier MNT et est appliqué sur les échantillons avant la détermination des représentations temporelle ou fréquentielle, et par conséquent avant le calcul dynamique du seuil de détection à appliquer à ces représentations.

Ainsi, avantageusement, le seuil de détection pour un mode de détection terre / mer peut rester faible, permettant de bénéficier d'une sensibilité maximale pour la détection de cibles sur la surface de la mer, en particulier à proximité de la côte, tout en évitant un taux élevé de fausses alarmes.

Cette approche permet de limiter le nombre de fausses alarmes et d'offrir une situation tactique moins confuse. Elle allège la complexité calculatoire, puisqu'il n'y a besoin de suivre qu'un petit nombre de détections à l'intérieur de la zone observée.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique des procédés de traitement selon l'état de la technique ;
- La figure 2 est une représentation schématique d'un premier procédé et d'un second procédé de traitement selon l'invention ;
- Les figures 3 à 5 illustrent différents graphes temporels lors de la mise en oeuvre du premier procédé de la figure 2 ; et,
- Les figures 6 à 8 illustrent schématiquement différents masques calculés lors de la mise en œuvre du second procédé de la figure 2 ; et,
- Les figures 9 à 11 illustrent différents graphes spectraux lors de la mise en oeuvre du second procédé de la figure 2.

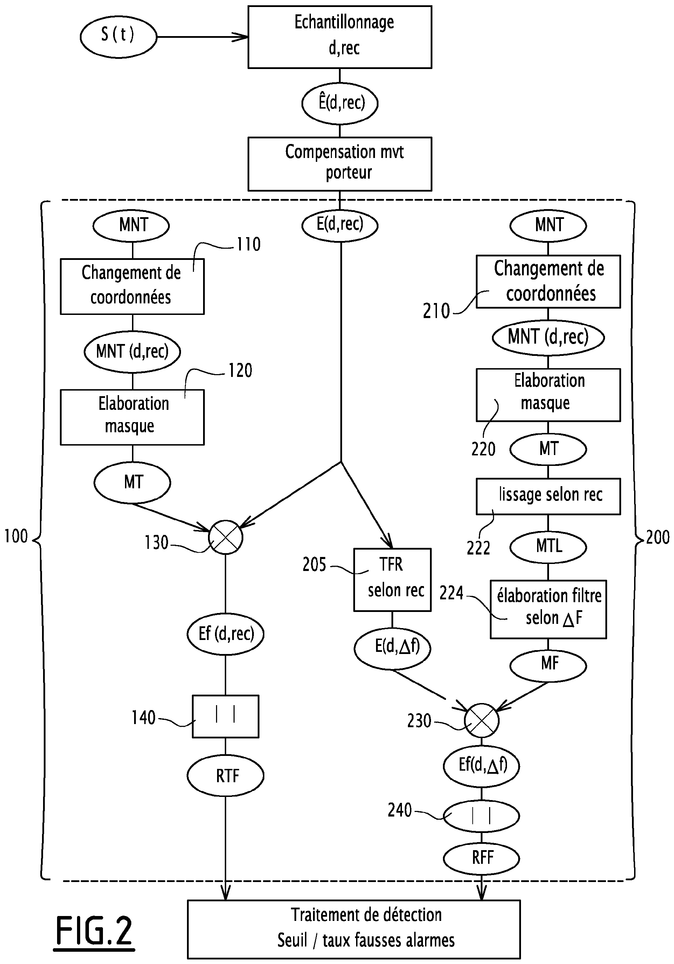

Un premier procédé 100, correspondant à un premier mode de réalisation du procédé de traitement selon l'invention, va maintenant être décrit en référence à la figure 2.

Ce premier procédé est spécifique à un traitement de détection non cohérent, visant à obtenir une représentation temporelle filtrée RTF de la zone côtière observée par le radar en mode terre / mer.

Dans ce premier mode de réalisation, un masque temporel MT est élaboré à partir d'un fichier MNT. Le masque est appliqué sur les échantillons distance / récurrence *E(d,rec)* de manière à écarter les échantillons qui correspondent à la surface de terre de la zone côtière observée, et à ne conserver que les échantillons qui correspondent à la surface de mer.

Dans une étape 110, un fichier MNT de description de la géographie de la zone côtière observée est transformé, à l'aide d'un changement de repère, de manière à exprimer, dans un repère commun, les informations du fichier MNT et la carte temporelle d'échantillonnage distance / récurrence du signal numérique du radar. Un fichier MNT transformé, en distance et récurrence, MNT*(d,rec)* est obtenu.

En variante, c'est la carte temporelle d'échantillonnage qui est transformée pour obtenir une carte temporelle d'échantillonnage transformée dans le repère utilisé par le fichier MNT. Lors de cette transformation, chaque cellule de la carte initiale est mise en correspondance avec une unique cellule de la carte transformée, de sorte que l'échantillon associé à une cellule de la carte initiale est aisément associé à la cellule correspondante de la carte transformée.

Dans encore une autre variante, la carte temporelle d'échantillonnage et le fichier MNT sont transformés.

Dans une étape 120, un masque temporel MT est initialisé. Il est constitué d'une matrice de cellules distance / récurrence ayant autant de cases distance et de cases récurrence que la carte temporelle d'échantillonnage distance / récurrence.

A chaque cellule, d'abscisse *d* et d'ordonnée *rec,* du masque temporel MT est associée une valeur *p(d, rec).* Dans le mode de réalisation actuellement envisagé, la valeur associée à une cellule est la valeur « 1 » lorsque l'intégralité de la surface correspondant à cette cellule dans le fichier MNT transformé est constituée par une surface de mer ; et la valeur « 0 » lorsqu'au moins une fraction de la surface correspondant à cette cellule dans le fichier MNT transformé est constituée par une surface de terre. Le masque temporel MT ainsi construit est un masque binaire.

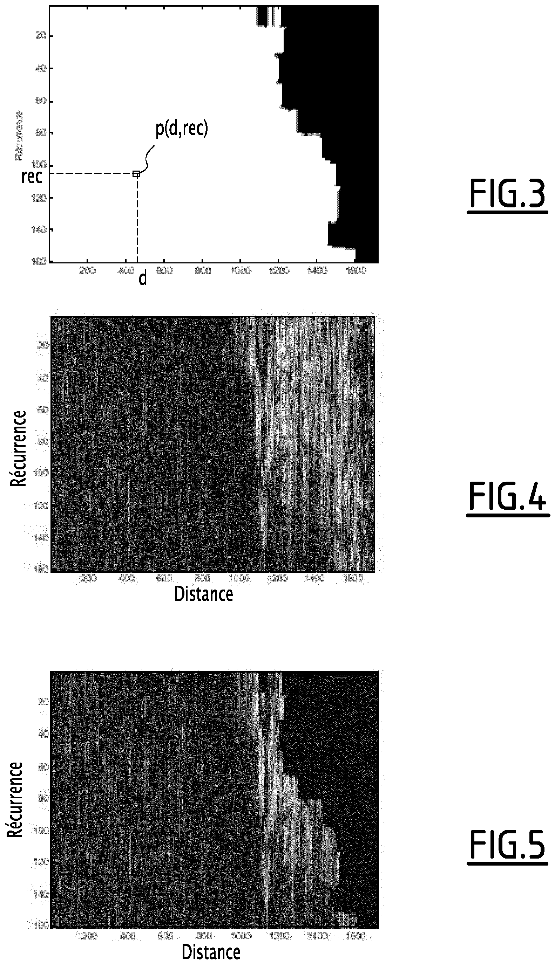

Un exemple d'un tel masque temporel binaire est représenté sur la figure 3.

De nombreuses variantes d'élaboration d'un tel masque temporel sont envisageables. Par exemple, la variante décrite ci-dessus pourrait être généralisée en associant à chaque cellule distance / récurrence du masque temporel MT, la valeur d'une fonction de la proportion de la surface de la cellule qui, d'après le fichier MNT transformé, est constituée par une surface de terre.

Puis, à l'étape 130, le masque temporel MT est appliqué aux échantillons distance / récurrence *E(d,rec),* de manière à ne retenir que les échantillons correspondant à une surface de mer. Plus précisément, pour une cellule d'abscisse *d* et d'ordonnée *rec*, l'échantillon *E(d,rec)* est pondéré par la valeur *p(d,rec)* du masque temporel MT. L'échantillon filtré correspondant est noté *Ef(d,rec).*

Puis, à l'étape 140, le calcul de l'amplitude ou de l'amplitude au carré des échantillons filtrés *Ef(d, rec)* conduit à une représentation temporelle filtrée RTF.

Une telle représentation temporelle filtrée est représentée sur la figure 5, tandis que la représentation temporelle non filtrée équivalente RT (obtenue par la mise en oeuvre du procédé selon l'art antérieur) est représentée sur la figure 4.

En aval du procédé 100, la représentation temporelle filtrée RTF est utilisée dans le traitement de détection. Le seuil de détection qui lui est appliqué est resensibilisé, au sens où le niveau du seuil de détection peut rester faible, puisque la représentation temporelle filtrée ne comporte pas d'échos parasites provenant de la surface de terre et que le nombre de détections, utilisé dans le calcul dynamique du seuil, reste par conséquent bas.

Un second procédé 200, correspondant à un second mode de réalisation du procédé de traitement selon l'invention, va maintenant être décrit en référence également à la figure 2.

Ce second procédé est spécifique à un traitement de détection cohérent visant à obtenir une représentation fréquentielle filtrée RFF de la zone côtière observée par le radar en mode de détection terre / mer.

Dans ce second mode de réalisation, le procédé 200 comporte une étape 205 de transformation temps - fréquence, du type transformée de Fourier rapide, des échantillons distance / récurrence *E(d,rec)* selon la dimension en récurrence. Chaque échantillon distance / fréquence Doppler *E(d,* Δ*f*) ainsi obtenu est associé à une cellule, d'abscisse *d* et d'ordonnée Δ*f*, d'une carte fréquentielle d'échantillonnage.

Le procédé 200 comporte une étape 210, similaire à l'étape 110, permettant d'exprimer les informations du fichier MNT décrivant la côte de la zone côtière observée dans un repère commun à la carte temporelle d'échantillonnage distance / récurrence du signal. Un fichier MNT transformé, en distance et récurrence, *MNT(d,rec),* est obtenu.

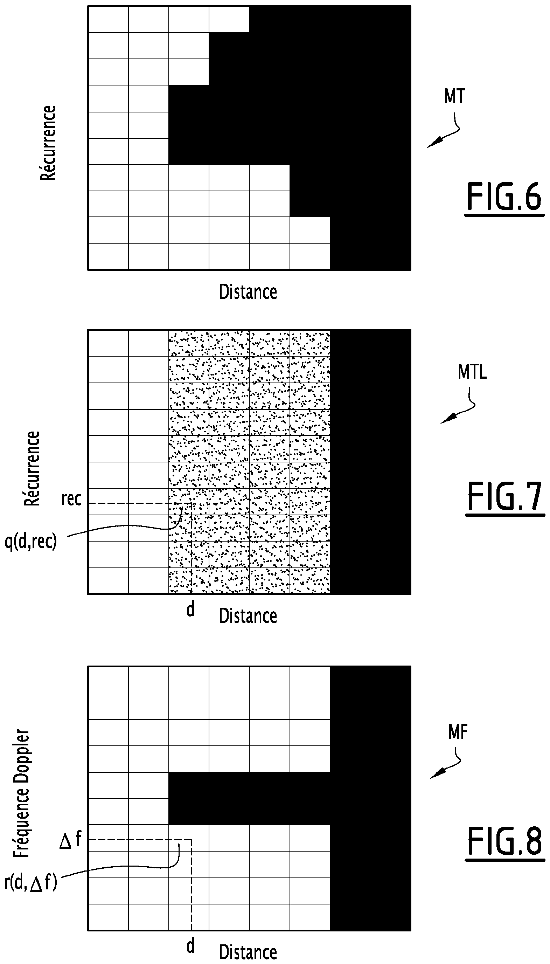

A l'étape 220, similaire à l'étape 120, un masque temporel MT est initialisé. Il est constitué d'une matrice de cellules avec autant de cases distance et de cases récurrence que la carte temporel d'échantillonnage. A chaque cellule du masque temporel MT est associée une valeur binaire *p(d,rec)* valant « 1 » lorsque l'intégralité de la surface correspondant à la cellule considérée dans le fichier MNT transformé, est une surface de mer ; et « 0 » lorsque au moins une partie de la surface de la cellule dans le fichier MNT transformé, est une surface de terre. Un exemple d'un tel masque temporel MT est représenté schématiquement sur la figure 6.

Puis, dans une étape 222, le masque temporel MT est transformé selon une dimension de traitement, en l'occurrence la dimension en récurrence, pour obtenir un masque temporel lissé MTL.

Un masque temporel lissé MTL est initialisé. Il est constitué d'une matrice de cellules avec autant de cases distance et de cases récurrence que le masque temporel MT.

Pour chaque case distance du masque temporel MT, on calcule la valeur moyenne des cases récurrence correspondantes.

Si cette valeur moyenne est égale à l'unité, c'est-à-dire si toutes les cellules à cette case distance correspondent à une surface de mer, la valeur *q(d,rec)* des cellules du masque temporel lissé MTL pour la case distance considérée est égale à l'unité.

Si cette valeur moyenne est nulle, c'est-à-dire si toutes les cellules à cette case distance correspondent à une surface de terre, la valeur *q(d,rec)* des cellules du masque temporel lissé MTL pour cette case distance est nulle.

Si cette valeur moyenne est entre « 0 » et « 1 », c'est-à-dire si pour cette case distance, il existe des cellules qui correspondent à une surface de mer et d'autres qui correspondent à une surface de terre, la valeur *q(d,rec)* des cellules du masque temporel lissé MTL pour cette case distance prennent une valeur intermédiaire, par exemple 0,5.

Est représenté à la figure 7, un tel masque temporel lissé MTL obtenu à partir du masque temporel MT de la figure 6.

Le masque temporel lissé MTL constitue une représentation à une dimension, en l'occurrence en distance.

L'étape 224 consiste ensuite à obtenir un masque fréquentiel MF à deux dimensions distance / fréquence Doppler à partir du maque temporel lissé MTL.

Un masque fréquentiel MF est initialisé. Il est constitué d'une matrice de cellules avec autant de cases distance et de cases fréquence Doppler que la carte fréquentielle d'échantillonnage distance / fréquence Doppler du signal.

A chaque cellule, d'abscisse *d* et d'ordonnée Δ*f*, du masque fréquentiel MF est associée une valeur *r(d,* Δ*f*).

Pour chaque case distance où la valeur *q(d,rec)* du masque temporel lissé MTL est égale à « 1 » (respectivement « 0 »), la valeur *q(d,* Δ*f*) des cellules du masque fréquentiel MF à cette case distance sont initialisées à la valeur « 1 » (respectivement « 0 »).

Pour chaque case distance où la valeur *q(d,rec)* du masque temporel lissé MTL est égale à « 0,5 », la valeur *r(d,* Δ*f*) des cellules du masque fréquentiel MF à cette case distance est initialisée à la valeur « 1 » ou à la valeur « 0 » de manière à supprimer l'empreinte fréquentielle du fouillis de terre. L'empreinte fréquentielle du fouillis de terre est déterminée selon des valeurs issues de la littérature. Etant généré par des obstacles essentiellement statiques, l'empreinte fréquentielle du fouillis de terre est centrée autour de la fréquence Doppler nulle. Ainsi, pour une telle case distance, les cellules autour de la fréquence Doppler nulle prennent la valeur « 0 » pour masquer le fouillis de terre, et les autres cellules prennent la valeur « 1 ».

Un masque fréquentiel MF obtenu à partir du masque temporel lissé MTL de la figure 7 est représenté schématiquement sur la figure 8.

Le masque fréquentiel MF élaboré à l'étape 230 est alors appliqué aux échantillons distance / fréquence Doppler *E(d,*Δ*f)* de manière à écarter les échos parasites provenant de la surface de terre, en particulier le fouillis de terre.

Plus particulièrement, un échantillon distance / fréquence Doppler *E(d,*Δ*f)* est pondéré par la valeur *q(d,* Δ*f*) du masque fréquentiel MF. L'échantillon filtré obtenu est noté *Ef(d,*Δ*f).*

Enfin, à l'étape 240, le calcul de l'amplitude ou de l'amplitude au carré d'un échantillon filtré *Ef(d,*Δ*f)* conduit à une représentation fréquentielle filtrée RFF.

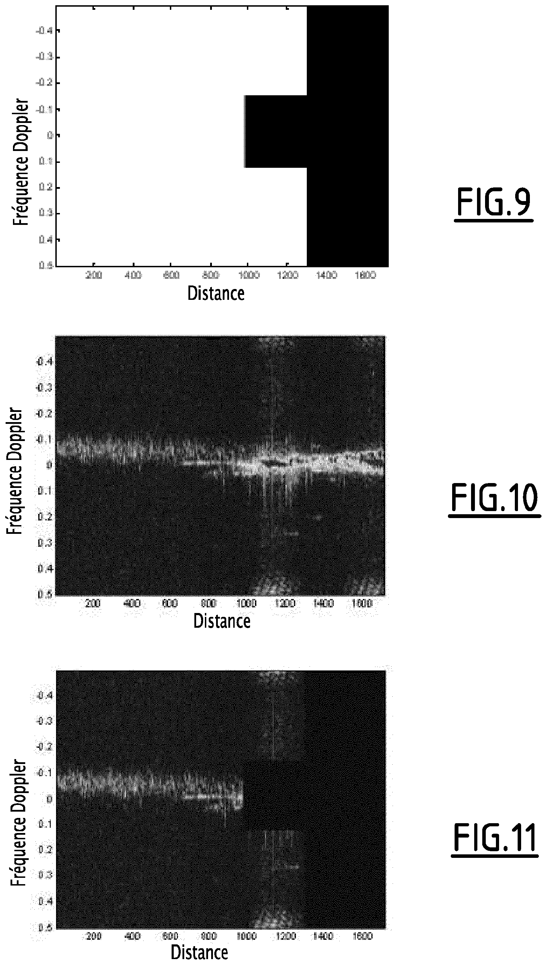

Une telle représentation fréquentielle filtrée est représentée sur la figure 11, tandis que la représentation fréquentielle non filtrée équivalente est représentée sur la figure 10. La représentation de la figure 11 a été obtenue en utilisant le masque fréquentiel MF de la figure 9, qui dérive du masque temporel MT de la figure 3.

En aval du procédé 200, la représentation fréquentielle filtrée RFF est utilisée dans un traitement de détection. Le seuil de détection appliqué sur cette représentation est resensibilisé, c'est-à-dire que le niveau du seuil de détection reste faible, puisque cette représentation ne comporte pas ou peu d'échos parasites causés par la surface de terre.

De nombreuses variantes des procédés précédents ci-dessus sont envisageables.

Par exemple le masque temporel pourrait être appliqué aux échantillons distance / récurrence, puis une transformée de Fourier rapide appliquée aux échantillons filtrés, pour obtenir des échantillons distance / fréquence Doppler.

Cependant, dans cette variante, après filtrage par application du masque, le nombre d'échantillons distance / récurrence selon la dimension d'application de la transformée de Fourier rapide peut être insuffisant pour obtenir une résolution en fréquence satisfaisante. De ce fait, la détection de cible au plus près de la côte devient problématique. Le second procédé décrit ci-dessus est alors plus avantageux puisqu'il permet de répondre à ce problème.

Le principal avantage du présent procédé de traitement est de resensibiliser le traitement de détection en mode de détection terre / mer, de manière à pouvoir détecter des cibles de faibles SER à la surface de la mer, et ceci au plus proche des côtes.

## Revendications

1. Procédé de traitement (100) du signal numérique (*S(t)*) d'un radar à impulsion et à balayage, électronique ou mécanique, lors d'une observation d'une zone côtière en mode de détection terre / mer, ledit signal étant échantillonné selon une carte d'échantillonnage à deux dimensions, une dimension correspondant à une distance (*d*) depuis le radar et l'autre dimension correspondant à une récurrence (rec) d'émission d'impulsion par le radar, la carte d'échantillonnage à deux dimensions étant ainsi constituée d'échantillons (*E(d,rec)*), **caractérisé en ce que** le procédé de traitement comporte :
- la sélection d'un fichier de modèle numérique de terrain (MNT) correspondant à la zone côtière observée ;
- la transformation (110) de la carte d'échantillonnage et du fichier de modèle numérique de terrain pour obtenir une carte d'échantillonnage transformée et un fichier de modèle numérique de terrain transformé dont les données sont exprimées dans un repère commun ;
- l'élaboration (120) d'un masque temporel (MT) en initialisant un masque temporel comportant une matrice de cellules ayant autant de cases distance et de cases récurrence que la carte temporelle d'échantillonnage transformée, et en affectant à chaque cellule du masque temporel une valeur (*p(d,rec)*) qui dépend de la proportion de la surface de terre sur la surface délimitée par ladite cellule dans le fichier de modèle numérique de terrain transformé ; et,
- l'application (130) dudit masque temporel aux échantillons (*E(d,rec)*) de la carte temporelle d'échantillonnage transformée, de manière à obtenir des échantillons filtrés (*Ef(d,rec)*), le masque temporel (MT) étant appliqué par pondération de l'échantillon (*E(d,rec)*) d'une cellule de la carte temporelle d'échantillonnage transformée, par la valeur (*p(d,rec)*) de la cellule correspondante du masque temporel (MT).

2. Procédé selon la revendication 1, dans lequel la valeur (*p(d,rec)*) d'une cellule du masque temporel (MT) est une valeur binaire, prenant la valeur nulle lorsque la cellule considérée contient une surface de terre, et la valeur unité lorsque la cellule comporte uniquement une surface de mer.

3. Procédé de traitement (200) du signal numérique (*S(t)*) d'un radar à impulsion et à balayage, électronique ou mécanique, lors d'une observation d'une zone côtière en mode de détection terre / mer, ledit signal étant échantillonné selon une carte d'échantillonnage à deux dimensions, une dimension correspondant à une distance (*d*) depuis le radar et l'autre dimension correspondant à unre récurrence (rec) d'émission d'impulsion par le radar, la carte d'échantillonnage à deux dimensions étant ainsi constituée d'échantillons (*E(d, rec*), **caractérisé en ce que** le procédé de traitement comporte :
- la sélection d'un fichier de modèle numérique de terrain (MNT) correspondant à la zone côtière observée ;
- la transformation (210) de la carte d'échantillonnage et du fichier de modèle numérique de terrain pour obtenir une carte d'échantillonnage transformée et un fichier de modèle numérique de terrain transformé dont les données sont exprimées dans un repère commun ;
- l'application (205) d'une transformation temps - fréquence selon la direction en récurrence sur les échantillons (*E(d,rec)*) de la carte temporelle d'échantillonnage transformée, de manière à obtenir des échantillons (*E(d,* Δ*f)*) associés à une carte fréquentielle d'échantillonnage à deux dimensions, une dimension correspondant à une distance depuis le radar et l'autre dimension correspondant à une fréquence Doppler des échos reçus ;
- l'élaboration (220) d'un masque temporel comportant une matrice de cellules ayant autant de cases distance et de cases récurrence que la carte temporelle d'échantillonnage transformée, et l'affectation à chaque cellule du masque temporel d'une valeur (*p(d,rec)*) qui dépend de la proportion de la surface de terre sur la surface délimitée par ladite cellule dans le fichier de modèle numérique de terrain transformé ;
- le lissage (222) du masque temporel (MT) selon la dimension en récurrence de manière à obtenir un masque temporel lissé (MTL) à une dimension selon la direction en distance ;
- la détermination d'un masque fréquentiel (MF) à partir du masque temporel lissé ; et,
- l'application (230) du masque fréquentiel aux échantillons (*E(d,* Δ*f)*) de la carte fréquentielle d'échantillonnage pour obtenir des échantillons filtrés (*Ef(d,* Δ*f)*), le masque fréquentiel (MF) étant appliqué par pondération de la valeur de chaque échantillon (*E(d,*Δ*f)*) par la valeur (*r(d,*Δ*f)*) de la cellule correspondante du masque fréquentiel (MF), pour obtenir des échantillons filtrés (*Ef(d,*Δ*f)*).

4. Procédé selon la revendication 3, dans lequel la valeur (*p(d,rec)*) d'une cellule du masque temporel (MT) est une valeur binaire, prenant la valeur nulle lorsque la cellule considérée contient une surface de terre, et la valeur unité lorsque la cellule comporte uniquement une surface de mer d'après le fichier de modèle numérique de terrain transformé.

5. Procédé selon la revendication 3 ou la revendication 4, dans lequel le masque temporel (MT) est lissé selon la dimension en récurrence en associant la valeur (*q(d,rec)*) unité aux cellules d'une case distance lorsque toutes les valeurs (*p(d,rec)*) des cellules du masque temporel pour cette case distance sont égales à l'unité; la valeur (*q(d,rec)*) nulle, lorsque toutes les valeurs (*p(d,rec)*) des cellules du masque temporel pour cette case distance sont nulles ; et sinon une valeur (*q(d,rec)*) intermédiaire.

6. Procédé selon la revendication 5, dans lequel, pour déterminer le masque fréquentiel (MF) à partir du masque temporel lissé (MTL), on associe à une cellule du masque fréquentiel filtré :
- la valeur *(r(d,* Δ*f)*) unité, lorsque les cellules de la case distance correspondante du masque temporel lissé ont la valeur (*q(d,rec)*) unité ;
- la valeur *(r(d,* Δ*f)*) nulle, lorsque les cellules de la case distance correspondante du masque temporel lissé ont la valeur (*q(d,rec)*) nulle ; et, sinon,
- la valeur *(r(d,* Δ*f)*) nulle si cette cellule coïncide avec une empreinte fréquentielle du fouillis de terre et la valeur *(r(d,* Δ*f)*) unité sinon.

7. Procédé selon l'une quelconque des revendications 1 à 6, comportant une étape de calcul d'une représentation temporelle et / ou fréquentielle filtrée (RTF ; RFF) à partir des échantillons filtrés *(Ef(d,rec) ; Ef(d,* Δ*f)*).

8. Dispositif de traitement du signal d'un radar à impulsion et à balayage, électronique ou mécanique, **caractérisé en ce qu'**il comporte des moyens pour la mise en œuvre d'un procédé de traitement dudit signal conforme à l'une quelconque des revendications 1 à 7.

9. Produit programme d'ordinateur comportant des instructions propres à être exécutées par un calculateur d'une chaîne de traitement de manière à mettre en œuvre un procédé de traitement du signal d'un radar d'un radar à impulsion et à balayage, électronique ou mécanique selon l'une quelconque des revendications 1 à 7.

## Patentansprüche

1. Verfahren zur Verarbeitung (100) eines Digitalsignals (S(t)) eines elektronischen oder mechanischen Impuls- und Abtastradars während der Beobachtung eines Küstengebiets im Land/See-Überwachungsmodus, wobei das Signal gemäß einer zweidimensionalen Abtastungskarte abgetastet wird, wobei eine Dimension mit einem Abstand (d) vom Radar aus korrespondiert und die andere Dimension mit einem Wiederkehren (rec) der Abstrahlung des Impulses durch das Radar korrespondiert, wobei die zweidimensionale Abtastungskarte aus Abtastungen (E(d,rec)) gebildet ist, welche **gekennzeichnet dadurch sind, dass** das Verfahren zur Verarbeitung aufweist:
- das Auswählen einer Datei eines digitalen Terrainmodells (MNT), welches mit dem beobachteten Küstengebiet korrespondiert,
- das Transformieren (110) der Abtastungskarte und der Datei des digitalen Terrainmodells zum Erlangen einer transformierten Abtastungskarte und einer transformierten Datei des digitalen Terrainmodells, deren Daten in einem gemeinsamen Bezugssystem ausgedrückt sind,
- das Erstellen (120) einer Zeitmaske (MT) durch Initialisieren einer Zeitmaske, welche eine Matrix aus Zellen aufweist, welche so viele Abstand-Felder und Wiederkehr-Felder aufweist wie die transformierte zeitliche Abtastungskarte, und durch Zuweisen, zu jeder Zelle der Zeitmaske, eines Werts (p(d,rec)), welcher vom Anteil der Landfläche auf der durch die Zelle begrenzten Fläche in der transformierten Datei des digitalen Terrainmodells abhängig ist, und
- das Anwenden (130) der Zeitmaske auf die Abtastungen (E(d,rec)) der transformierten zeitlichen Abtastungskarte, um gefilterte Abtastungen (Ef(d,rec)) zu erlangen, wobei die Zeitmaske (MT) durch Gewichtung der Abtastung (E(d,rec)) einer Zelle der transformierten zeitlichen Abtastungskarte mittels des Werts (p(d,rec)) der Zelle, welche zu der Zeitmaske (MT) gehört, angewendet wird.

2. Verfahren gemäß dem Anspruch 1, wobei der Wert (p(d,rec)) einer Zelle der Zeitmaske (MT) ein Binärwert ist, welcher den Wert Null annimmt, wenn die betrachtete Zelle eine Landfläche enthält, und den Wert eins annimmst, wenn die Zelle nur Meerfläche aufweist.

3. Verfahren zur Verarbeitung (100) eines Digitalsignals (S(t)) eines elektronischen oder mechanischen Impuls- und Abtastradars während der Beobachtung eines Küstengebiets im Land/See-Überwachungsmodus, wobei das Signal gemäß einer zweidimensionalen Abtastungskarte abgetastet wird, wobei eine Dimension mit einem Abstand (d) vom Radar aus korrespondiert und die andere Dimension mit einem Wiederkehren (rec) der Abstrahlung des Impulses durch das Radar korrespondiert, wobei die zweidimensionale Abtastungskarte aus Abtastungen (E(d,rec)) gebildet ist, welche **gekennzeichnet dadurch sind, dass** das Verfahren zur Verarbeitung aufweist:
- das Auswählen einer Datei eines digitalen Terrainmodells (MNT), welches mit dem beobachteten Küstengebiet korrespondiert,
- das Transformieren (210) der Abtastungskarte und der Datei des digitalen Terrainmodells zum Erlangen einer transformierten Abtastungskarte und einer transformierten Datei des digitalen Terrainmodells, deren Daten in einem gemeinsamen Bezugssystem ausgedrückt sind,
- das Anwenden eines Zeit-Frequenz-Transformationsschritts entlang der Wiederkehrrichtung auf die Abtastungen (E(d,rec)) der transformierten zeitlichen Abtastungskarte, um Abtastungen (E(d,Δf)) zu erlangen, welche zu einer zweidimensionalen Frequenz-Abtastungskarte gehören, wobei eine Dimension mit einem Abstand vom Radar korrespondiert und die andere Dimension mit einer Dopplerfrequenz der empfangenen Echos korrespondiert,
- das Erstellen (220) einer Zeitmaske, welche eine Matrix aus Zellen aufweist, welche so viele Abstand-Felder und Wiederkehr-Felder aufweist wie die transformierte zeitliche Abtastungskarte, und Zuweisen, zu jeder Zelle der Zeitmaske, eines Werts (p(d,rec)), welcher vom Anteil der Landfläche auf der durch die Zelle begrenzten Fläche in der transformierten Datei des digitalen Terrainmodells abhängig ist,
- das Glätten (222) der Zeitmaske (MT) entlang der Wiederkehrrichtung, um eine geglättete Zeitmaske (MTL) mit einer Dimension entlang der Abstandsrichtung zu erlangen,
- das Ermitteln einer Frequenzmaske (MF) aus der geglätteten Zeitmaske (MTL), und
- das Anwenden (230) der Frequenzmaske auf Abtastungen (E(d,Δf)) der Frequenz-Abtastungskarte, um gefilterte Abtastungen (Ef(d,Δf)) zu erlangen, wobei die Frequenzmaske (MF) durch Gewichtung des Werts jeder Abtastung (E(d,Δf)) mittels des Werts (r(d,Δf)) der Zelle, welche zu der Frequenzmaske (MF) gehört, angewendet wird, um die gefilterten Abtastungen (Ef(d,Δf)) zu erlangen.

4. Verfahren gemäß dem Anspruch 3, wobei der Wert (p(d,rec)) einer Zelle der Zeitmaske (MT) ein Binärwert ist, welcher den Wert Null annimmt, wenn die betrachtete Zelle eine Landfläche enthält, und den Wert eins annimmst, wenn die Zelle nur Meerfläche aufweist, laut der transformierten Datei des digitalen Terrainmodells.

5. Verfahren gemäß dem Anspruch 3 oder dem Anspruch 4, wobei die Zeitmaske (MT) entlang der Wiederkehr-Dimension geglättet wird durch Zuweisen des Werts (q(d,rec)) Eins zu den Zellen eines Abstand-Felds, wenn alle Werte (p(d,rec)) der Zellen der Zeitmaske für dieses Abstandsfeld gleich Eins sind, des Werts (q(d,rec)) Null, wenn alle Werte (p(d,rec)) der Zellen der Zeitmaske für dieses Abstandsfeld Null sind, und ansonsten eine dazwischenliegenden Werts (q(d,rec)).

6. Verfahren gemäß dem Anspruch 5, wobei, zum Ermitteln der Frequenzmaske (MF) aus der geglätteten Zeitmaske (MTL), einer Zelle der gefilterten Frequenzmaske zugewiesen wird:
- der Wert (r(d,Δf)) Eins, wenn die Zellen des Abstand-Felds, welches zu der geglätteten Zeitmaske gehört, den Wert (q(d,rec)) Eins haben,
- der Wert (r(d,Δf)) Null, wenn die Zellen des Abstand-Felds, welches zu der geglätteten Zeitmaske gehört, den Wert (q(d,rec)) Null haben, und, ansonsten,
- der Wert (r(d,Δf)) Null, falls diese Zelle mit einer Frequenzabdrucks eines Land-Clutters übereinstimmt, und der Wert (q(d,rec)) Eins, falls nicht.

7. Verfahren gemäß irgendeinem der Ansprüche 1 bis 6, aufweisend einen Schritt des Berechnens einer gefilterten Zeit- und/oder Frequenz-Darstellung (RTF; RFF) aus den gefilterten Abtastungen (Ef(d,rec); Ef(d,Δf)).

8. Vorrichtung zum Verarbeiten eines Signals eines elektronischen oder mechanischen Impuls- und Abtastradars, **gekennzeichnet dadurch, dass** sie Mittel zum Umsetzen eines Verfahrens zur Verarbeitung des Signals im Einklang mit irgendeinem der Ansprüche 1 bis 7 aufweist.

9. Computerprogrammprodukt, aufweisend Anweisungen, welche dazu geeignet sind, durch einen Rechner einer Verarbeitungskette dazu ausgeführt zu werden, ein Verfahren zur Verarbeitung eines Signals eines elektronischen oder mechanischen Impuls- und Abtastradars gemäß irgendeinem der Ansprüche 1 bis 7 umzusetzen.

## Claims

1. A processing method (100) of a digital signal (S(t)) of an electronic or mechanical pulse and scanning radar during an observation of a coastal zone in land / sea detection mode, said signal being sampled according to a two-dimensional temporal sampling map, one dimension corresponding to a distance (d) from the radar and the other dimension corresponding to a recurrence *(rec)* of pulse emission by the radar, the two-dimensional temporal sampling map being thus made of samples (E(d,rec)), **characterized in that** the processing method includes:
- selecting a digital terrain model file (MNT) corresponding to the observed coastal zone;
- transforming (110) the temporal sampling map and the digital terrain model file to obtain a transformed temporal sampling map and a transformed digital terrain model file whose data are expressed in a shared reference frame;
- constructing (120) a temporal mask (MT) by initializing a temporal mask including a matrix of cells having as many distance bins and recurrence bins as the transformed temporal sampling map, and by allocating to each cell of the temporal mask a value *(p(d,rec)* that depends on the proportion of the land surface to the surface defined by said cell in the transformed digital terrain model file; and
- applying (130) said temporal mask to the samples *(E(d,rec))* of the transformed temporal sampling map, so as to obtain filtered samples *(Ef(d,rec),* the temporal mask (MT) being applied by weighting the sample (*E(d,rec)*) of a cell of the transformed temporal sampling map, by the value (*p(d,rec)*) of the corresponding cell of the temporal mask (MT).

2. The method according to claim 1, wherein the value (*p(d,rec))* of a cell of the temporal mask (MT) is a binary value, assuming the zero value when the considered cell contains the land surface, and the unit value when the cell includes only a sea surface.

3. A processing method (200) of a digital signal (S(t)) of an electronic or mechanical pulse and scanning radar during an observation of a coastal zone in land / sea detection mode, said signal being sampled according to a two-dimensional temporal sampling map, one dimension corresponding to a distance (d) from the radar and the other dimension corresponding to a recurrence (rec) of pulse emission by the radar, the two-dimensional temporal sampling map being thus made of samples (E(d,rec)), **characterized in that** the processing method includes:
- selecting a digital terrain model file (MNT) corresponding to the observed coastal zone;
- transforming (210) the temporal sampling map and the digital terrain model file to obtain a transformed temporal sampling map and a transformed digital terrain model file whose data are expressed in a shared reference frame;
- applying (205) a time - frequency transform in the recurrence direction on the samples (*E(d,rec)*) of the transformed temporal sampling map, so as to obtain samples (*E(d,*Δ*f)*) associated with a two-dimensional frequency sampling map, one dimension corresponding to a distance from the radar and the other dimension corresponding to a Doppler frequency of the received echoes;
- constructing (220) a temporal mask including initializing a temporal mask including a matrix of cells having as many distance bins and recurrence bins as the transformed temporal sampling map, and allocating to each cell of the temporal mask of a value (*p(d,rec)*) that depends on the proportion of the land surface to the surface defined by said cell in the transformed digital terrain model file;
- smoothing (222) the temporal mask (MT) along the recurrence dimension so as to obtain a smoothed temporal mask (MTL) having one dimension along the distance direction;
- determining the frequency mask (MF) from the smoothed temporal mask; and
- applying (230) the frequency mask to the samples (*E(d,* Δ*f)*) of the frequency sampling map to obtain filtered samples (*Ef(d,* Δ*f)*), the frequency mask (MF) is applied by weighting the value of each sample (*E(d,*Δ*f)*) by the value (*r(d,*Δ*f)*) of the corresponding cell of the frequency mask (MF), to obtain filtered samples (*Ef(d,*Δ*f)*).

4. The method according to claim 3, wherein the value (*p(d,rec)* of a cell of the temporal mask (MT) is a binary value, assuming the zero value when the considered cell contains the land surface, and the unit value when the cell includes only a sea surface according to the transformed digital terrain model file.

5. The method according to claim 3 or claim 4, wherein the temporal mask (MT) is smoothed along the recurrence dimension by associating the one value *(q(d,rec))* with the cells of a distance bin when all of the values (*p(d,rec)*) of the cells of the temporal mask for this distance bin are equal to one; the zero value (*q(d,rec)*), when all of the values (*p(d,rec)*) of the cells of the temporal mask for this distance bin are zero; and otherwise, an intermediate value *(q(d,rec)).*

6. The method according to claim 5, wherein, to determine the frequency mask (MF) from the smoothed temporal mask (MTL), one associates, with a cell of the filtered frequency mask:
- the one value (*r(d,* Δ*f)*), when the cells of the corresponding distance bin of the smoothed temporal mask have the one value (*q(d,rec)*);
- the zero value (*r(d,* Δ*f)*), when the cells of the corresponding distance bin of the smoothed temporal mask have the zero value (*q(d,rec)*); and otherwise
- the zero value (*r(d,* Δ*f)*) if this cell coincides with a frequency imprint of the land clutter and the one value (*r(d,* Δ*f)*) otherwise.

7. The method according to any one of claims 1 to 6, including a step for computing a filtered temporal and / or frequency representation (RTF; RFF) from filtered samples (*Ef(d,rec); Ef(d,* Δ*f)*).

8. A processing device for a signal of an electronic or mechanical pulse and scanning radar, **characterized in that** it includes means for implementing a processing method of said signal according to any one of claims 1 to 7.

9. A computer program product including instructions able to be executed by a computer of a processing chain so as to carry out a method for processing a signal from an electronic or mechanical pulse and scanning radar according to any one of claims 1 to 7.
